# EUROPÄISCHE PATENTSCHRIFT

(11) **EP 1 311 575 B1**
(45) Veröffentlichungstag und Bekanntmachung des Hinweises auf die Patenterteilung: **30.09.2009**
(21) Anmeldenummer: 01983448.0
(22) Anmeldetag: 22.08.2001
(51) Int. Cl.: C08G 18/28, C08G 18/62, C08G 18/81

(54) **MIT AKTINISCHER STRAHLUNG AKTIVIERBARES THIXOTROPIERUNGSMITTEL, VERFAHREN ZU SEINER HERSTELLUNG UND SEINE VERWENDUNG**
THIXOTROPIC AGENT THAT CAN BE ACTIVATED USING ACTINIC RADIATION, A METHOD FOR ITS PRODUCTION AND THE USE THEREOF
AGENT THIXOTROPE ACTIVABLE PAR RAYONNEMENT ACTINIQUE, SON PROCEDE DE PREPARATION ET SON UTILISATION

(30) Priorität: 26.08.2000 DE 10042152
(43) Veröffentlichungstag der Anmeldung: 21.05.2003
(73) Patentinhaber: BASF Coatings AG, 48165 Münster (DE)
(72) Erfinder: RÖCKRATH, Ulrike, 48308 Senden (DE); CONRING, Uwe, 48249 Dülmen 3 (DE); BAUMGART, Hubert, 48163 Münster (DE); HEID, Ingrid, 48149 Münster (DE)
(74) Vertreter: Leifert & Steffan
(86) Internationale Anmeldenummer: PCT/EP2001/009696
(87) Internationale Veröffentlichungsnummer: WO 2002/018468

(56) Entgegenhaltungen:
- US-A- 4 425 468
- US-A- 4 677 028
- US-A- 4 965 317

## Beschreibung

Die vorliegende Erfindung betrifft ein neues Harnstoffkristalle enthaltendes Thixotropierungsmittel, das mit aktinischer Strahlung aktivierbar ist. Außerdem betrifft die vorliegende Erfindung ein neues Verfahren zur Herstellung von Harnstoffkristallen enthaltenden Thixotropierungsmitteln. Des weiteren betrifft die vorliegende Erfindung die Verwendung des neuen, Harnstoffkristalle enthaltenden Thixotropierungsmittels für die Herstellung von thermisch und mit aktinischer Strahlung härtbaren Beschichtungsstoffen, Klebstoffen und Dichtungmassen. Des weiteren betrifft die vorliegende Erfindung neue, thermisch und mit aktinischer Strahlung härtbare Beschichtungsstoffe, Klebstoffe und Dichtungmassen, die das neue, Harnstoffkristallen enthaltende Thixotropierungsmittel enthalten. Darüber hinaus betrifft die vorliegende Erfindung die Verwendung der neuen, thermisch und mit aktinischer Strahlung härtbaren Beschichtungsstoffe, Klebstoffe und Dichtungsmassen für die Herstellung von neuen Beschichtungen, Klebsschichten und Dichtungen.

Beschichtungsstoffe müssen nach ihrer Applikation eine sehr gute Standsicherheit aufweisen, damit sie einerseits die Herstellung vergleichsweise dicker Lackschichten und Lackierungen ermöglichen, ohne daß es hierbei zu der äußerst störenden "Läuferbildung" insbesondere an senkrecht stehenden Substraten kommt. Andererseits darf die Viskosität der Beschichtungsstoffe nicht so hoch sein, daß bei der Applikation Probleme auftreten und kein guter Verlauf der applizierten Lackschichten mehr möglich ist.

Diese Probleme treten verstärkt bei Beschichtungsstoffen, insbesondere Klarlacken, mit hohem Festkörpergehalt auf. Die Verwendung von Beschichtungsstoffen mit hohem Festkörpergehalt ist indes aus ökologischen Gründen vorteilhaft, weil sie bei der Applikation und der Härtung weniger leicht flüchtige organische Materialien emittieren. Gleichzeitig müssen auch diese Beschichtungsstoffe Lackierungen, insbesondere Klarlackierungen, liefern, die hinsichtlich des Glanzes, der Transparenz und Klarheit, der Kratzfestigkeit, der Witterungsbeständigkeit und der Vergilbunsbeständigkeit allen Ansprüchen des Marktes genügen.

Vergleichbare Probleme treten auch bei Klebstoffen und Dichtungsmassen auf.

Das rheologische Verhalten von Beschichtungsstoffen kann mit Hilfe von Harnstoffkristalle enthaltenden Thixotropierungsmitteln positiv beeinflußt werden. Diese Thixotropierungsmittel werden bekanntermaßen aus Polyisocyanaten und Aminen in der Gegenwart von hydroxylgruppenhaltigen Bindemitteln in situ hergestellt. Dies ist deshalb möglich, weil die Hydroxylgruppen langsamer mit den Isocyanatgruppen reagieren als die Aminogruppen. Beispielhaft wird hierzu auf die Patentschriften DE 23 60 019 B2, DE 23 59 9123 B1, DE 23 59 129 B1, DE 198 11 471 A1, DE 27 51 761 C2, EP 0 192 304 B1 oder WO 94/22968 verwiesen. Vergleichbare Thixotropierungsmittel und Verfahren zu ihrer Herstellung werden in den nicht vorveröffentlichten Patentanmeldungen mit den Aktenzeichen DE 199 24 170.8, 199 24 172.4 oder 199 24 171.6 beschrieben.

Nachteilig für diese Thixotropierungsmittel und die Verfahren zu ihrer Herstellung ist, daß sie im wesentlichen nur für die Herstellung von Beschichtungsstoffen, Klebstoffen und Dichtungsmassen verwendet werden können, die dieselben Bindemittel enthalten, wie sie für die Herstellung der Thixotropierungsmittel angewandt wurden.

Es besteht daher ein Bedarf an Harnstoffkristallen enthaltenden Thixotropierungsmitteln, die nicht in situ in der Gegenwart hydroxylgruppenhaltiger Bindemittel hergestellt werden müssen, sondern separat hergestellt und den unterschiedlichsten Beschichtungsstoffen, Klebstoffen und Dichtungsmassen, insbesondere aber Beschichtungsstoffen, zugesetzt werden können. Die betreffenden Beschichtungsstoffe sollen sehr gute Applikationseigenschaften, eine sehr gute Standfestigkeit und einen sehr guten Verlauf aufweisen und Lackierungen, insbesondere Klarlackierungen, liefern, die hinsichtlich des Glanzes, der Transparenz und Klarheit, der Kratzfestigkeit, der Witterungsbeständigkeit und der Vergilbunsbeständigkeit allen Ansprüchen des Marktes genügen. Dies gilt mutatis mutandis auch für die Klebstoffe und Dichtungsmassen.

Die bisher bekannten Harnstoffkristalle enthaltenden Thixotropierungsmittel werden vor allem für thermisch härtbare Beschichtungsstoffe, Klebstoffe und Dichtungsmassen verwendet. Sollen die bekannten thermisch härtbaren Beschichtungsstoffe, Klebstoffe und Dichtungsmassen auch noch mit aktinischer Strahlung härtbar sein, müssen ihnen Bestandteile wie Bindemittel oder Reaktiverdünner zugesetzt werden, die mit aktinischer Strahlung aktivierbare Gruppen enthalten. Diese zusätzlichen Bestandteile können aber das rheologische Verhalten der betreffenden Beschichtungsstoffe, Klebstoffe und Dichtungsmassen unvorhersehbarer Weise nachteilig beeinflussen.

Aufgabe der vorliegenden Erfindung ist es, ein neues, Harnstoffkristalle enthaltendes Thixotropierungsmittel zu finden, das mit aktinischer Strahlung aktivierbar ist und nicht in situ in der Gegenwart der Bindemittel von Beschichtungsstoffen, Klebstoffen und Dichtungmassen hergestellt werden muß, sondern das separat hergestellt und bei Bedarf verwendet werden kann. Das neue, Harnstoffkristalle enthaltende, mit aktinischer Strahlung härtbare Thixotropierungsmittel soll der Herstellung von Beschichtungsstoffen, Klebstoffen und Dichtungmassen dienen, die thermisch und mit aktinischer Strahlung gehärtet werden können. Dabei sollen die Beschichtungsstoffe, Klebstoffe und Dichtungmassen ein ausgezeichnetes rheologisches Verhalten, sehr gute Applikationseigenschaften, eine sehr gute Standfestigkeit und einen sehr guten Verlauf aufweisen und Lackierungen, insbesondere Klarlackierungen, liefern, die hinsichtlich des Glanzes, der Transparenz und Klarheit, der Kratzfestigkeit, der Witterungsbeständigkeit und der Vergilbunsbeständigkeit allen Ansprüchen des Marktes genügen. Dies gilt mutatis mutandis auch für die Klebstoffe und Dichtungsmassen.

Demgemäß wurde das neue, Harnstoffkristalle enthaltende Thixotropierungsmittel gefunden, das mindestens eine Verbindung enthält, die mindestens drei funktionelle Gruppen mit mindestens einer mit aktinischer Strahlung aktivierbaren Bindung aufweist.

Im folgenden wird das neue, Harnstoffkristalle enthaltende Thixotropierungsmittel als "erfindungsgemäßes Thixotropierungsmittel" bezeichnet.

Außerdem wurde das neue Verfahren zur Hertellung eines Thixotropierungsmittels gefunden, bei dem man mindestens ein primäres und/oder sekundäres Amin und/oder Wasser mit mindestens einem Polyisocyanat in einem flüssigen organischen Medium umsetzt, das mindestens eine Vebindung, die mindestens drei funktionelle Gruppen mit mindestens einer mit aktinischer Strahlung aktivierbaren Bindung aufweist, enthält oder hieraus besteht.

Im folgenden wird das neue Verfahren zur Herstellung eines Thixotropierungsmittels als "erfindungsgemäßes Verfahren" bezeichnet.

Außerdem wurden die neuen thermisch und mit aktinischer Strahlung härtbaren Beschichtungsstoffe, Klebstoffe und Dichtungsmassen gefunden, die mindestens ein erfindungsgemäßes Thixotropierungsmittel und/oder mindestens ein nach dem erfindungsgemäßen Verfahren hergestelltes Thixotropierungsmittel enthalten.

Im folgenden werden die neuen thermisch und mit aktinischer Strahlung härtbaren Beschichtungsstoffe, Klebstoffe und Dichtungsmassen als "erfindungsgemäße Beschichtungsstoffe, Klebstoffe und Dichtungsmassen" bezeichnet.

Des weiteren wurden die neuen Beschichtungen, Klebschichten und Dichtungen gefunden, die aus den erfindungsgemäßen Beschichtungsstoffen, Klebstoffen und Dichtungsmassen durch thermische Härtung und Härtung mit aktinischer Strahlung herstellbar sind und im folgenden als erfindungsgemäße Beschichtungen, Klebschichten und Dichtungen bezeichnet werden.

Weitere erfindungsgemäße Gegenstände ergeben sich aus der Beschreibung.

Im Hinblick auf den Stand der Technik war es überraschend und für den Fachmann nicht vorhersehbar, daß die Aufgabe, die der vorliegenden Erfindung zugrundelag, mit Hilfe des erfindungsgemäßen Thixotropierungsmittels gelöst werden konnte, da bisher die Thixotropierungsmittel immer in dem Bindemittel bzw. der Bindemittellösung der jeweiligen Beschichtungsstoffe, Klebstoffe und Dichtungsmassen hergestellt werden mußten. Noch mehr überraschte, daß mit Hilfe des erfindungsgemäßen Thixotropierungsmittels in einfacher Weise die erfindungsgemäßen Beschichtungsstoffe, Klebstoffe und Dichtungsmassen hergestellt werden können, die ein vorzügliches anwendungstechnisches Eingenschaftsprofil aufweisen, ohne daß das rheologische Verhalten negativ beeinflußt wird.

Das erfindungsgemäße Thixotropierungsmittel enthält mindestens eine Verbindung, die mindestens drei funktionelle Gruppen mit mindestens einer mit aktinischer Strahlung aktivierbaren Bindung aufweist. Vorzugsweise ist die Verbindung flüssig.

Unter aktinischer Strahlung wird im Rahmen der vorliegenden Erfindung elektromagnetische Strahlung oder Korpuskularstrahlung verstanden. Als elektromagnetische Strahlung wird vorzugsweise nahes Infrarot (NIR), sichtbares Licht, UV-Strahlung und/oder Röntgenstrahlung, insbesondere UV-Strahlung, und als Korpuskularstrahlung wird vorzugsweise Elektronenstrahlung verwendet

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, insbesondere in der Form von Epoxidgruppen, Kohlenstoff-Stickstoff-, Kohlenstoff-Phosphor- oder Kohlenstoff-Silizium-Einzelbindungen oder -Doppelbindungen.

Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Besonders gut geeignete Doppelbindungen sind beispielsweise in (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen enthalten, die zusanmmenfassend als aktivierbare funktionelle Gruppen bezeichnet werden.

Vorteilhafte Verbindungen enthalten im statistischen Mittel mindestens zwei, bevorzugt mindestens drei, besonders bevorzugt mindestens vier, ganz besonders bevorzugt vier bis sechs und insbesondere fünf funktionelle Gruppen pro Molekül. Die aktivierbaren funktionellen Gruppen können dabei dieselbe Struktur oder mindestens zwei unterschiedliche Strukturen aufweisen. Vorzugsweise werden eine Struktur oder zwei unterschiedliche Strukturen verwendet.

Vorzugsweise enthalten die aktivierbaren funktionellen Gruppen mindestens eine Doppelbindung. Demnach enthält eine aktivierbare funktionelle Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der aktivierbaren funktionellen Gruppe vorliegen. Erfindungsgemäß ist es von besonderem Vorteil zwei, insbesondere eine, Doppelbindung(en) zu verwenden.

Werden unterschiedliche aktivierbare funktionelle Gruppen verwendet, sind die Kombinationen von (Meth)Acrylatgruppen, insbesondere Acrylatgruppen, mit Vinylguppen und/oder Allylgruppen oder von Vinylgruppen und Allylgruppen von Vorteil und werden deshalb bevorzugt verwendet.

Wird nur eine Art von aktivierbaren funktionellen Gruppen verwendet, werden vorzugsweise (Meth)Acrylatgruppen, insbesondere Acrylatgruppen, Vinylgruppen oder Allylgruppen verwendet.

Beispiele geeigneter Verbindungen mit mindestens einer aktivierbaren funktionellen Gruppe sind aus Römpp Lexikon Lacke und Druckfarben, Georg Thieme Verlag, Stuttgart, New York,1998, »Reaktiverdünner«, Seiten 491 und 492, bekannt.

Das Beispiel einer geeigneten Verbindung mit fünf aktivierbaren funktionellen Gruppen ist Dipentaerythritpentaacrylat. Es ist eine handelsübliche Verbindung, die unter der Marke Sartomer® 399 von der Firma Cray Valley, Frankreich, vertrieben wird.

Die vorstehend beschriebenen Verbindungen mit mindestens einer aktivierbaren funktionellen Gruppen können, sofern sie flüssig sind, als organisches Medium bei der Herstellung der Harnstoffkristalle dienen. Vorzugsweise werden ihnen mindestens ein inertes organisches Lösemittel zugesetzt. Die Eigenschaft "inert" bedeutet, daß das organische Lösemittel nicht mit den Ausgangsverbindungen der Harnstoffkristalle reagiert. Beispiele geeigneter inerter organischer Lösemittel sind vergleichsweise hochsiedende Lösemittel, die unter den Marken Decalin®, Shellsol®, Solvesso®, Kristallöl®, Tetralin®, Isopar® oder Texanol® vertrieben werden. Das Gewichtsverhältnis von Verbindungen mit mindestens einer aktivierbaren funktionellen Gruppe und inertem organischem Lösemittel kann sehr breit variieren. Vorzugsweise wird von dem inerten organischen Lösemittel nur so viel angewandt, daß das resultierende organische Medium flüssig ist.

Die in dem erfindungsgemäßen Thixotropierungsmittel enthaltenen Harnstoffkristalle sind vorzugsweise nadelförmig und zum Teil oder insgesamt helixartig verdrillt. Vorzugsweise weisen Sie eine Teilchengrößenverteilung (TGV) zwischen 0,1 und 6,0 µm auf. Dabei sind 80% der Harnstoffkristalle < 2 µm.

Der Gehalt des erfindungsgemäßen Thixotropierungsmittels an den Harnstoffkristallen kann breit variieren und richtet sich insbesondere nach dem rheologischen Verhalten, das die erfindungsgemäßen Beschichtungsstoffe, Klebstoffe und Dichtungsmassen haben sollen. Vorzugsweise enthält das erfindungsgemäße Thixotropierungsmittel die Harnstoffkristalle in einer Menge von, bezogen auf das Thixotropierungsmittel, 0,1 bis 10, bevorzugt 0,2 bis 9, besonders bevorzugt 0,3 bis 8, ganz besonders bevorzugt 0,4 bis 7 und insbesondere 0,5 bis 6 Gew.-%.

Das erfindungsgemäße Thixotropierungsmittel ist herstellbar, in dem man mindestens ein primäres und/oder sekundäres Amin und/oder Wasser mit mindestens einem Polyisocyanat in dem vorstehend beschriebenen organischen Medium umsetzt, wobei die Ausgangsprodukte vorzugsweise in solche Mengen verwendet werden, daß der vorstehend beschriebene Gehalt an Harnstoffkristallen resultiert. Vorzugsweise werden diese Ausgangsprodukte in solchen Mengen miteinander umgesetzt, daß das Äquivalentverhältnis zwischen isocyanatreaktiven Gruppen und Isocyanatgruppen zwischen 1,2 und 0,4, vorzugsweise zwischen 1,1 und 0,8 liegt.

Besonders vorteilhafte erfindungsgemäße Thixotropierungsmittel werden erhalten, wenn als Amine primäre und/oder sekundäre Amine, vorzugsweise primäre Amine und insbesondere primäre Monoamine als Ausgangsverbindungen eingesetzt werden. Weitere Vorteile resultieren aus der Verwendung araliphatischer oder aliphatischer primärer Monoamine, insbesondere aliphatischer primärer Monoamine mit mindestens 6 Kohlenstoffatomen im Molekül. Beispiele geeigneter primärer Monoamine sind Benzylamin, Ethylamin, n-Propylamin, Isopropylamin, n-Butylamin, Isobutylamin, tert. -Butylamin, Pentylamin, n-Hexylamin, n-Octylamin, iso-Nonanylamin, iso-Tridecylamin, n-Decylamin, Stearylamin oder Ethanolamin.

Des weiteren sind primäre und sekundäre acyclische oder cyclische Amine einsetzbar, welche Ethergruppen enthalten. Es handelt sich hierbei beispielsweise um Morpholin oder um Stoffe der allgemeinen Formel (CH₃-(CH₂)ₐ-O-(CH₂)_{b})_{c}NH_{d}, wobei a eine ganze Zahl von 0 bis 10, b eine ganze Zahl von 1 bis 20, c 1 oder 2 ist und die Summe aus c und d stets 3 beträgt. Vorzugsweise sind a = 0, b = 3, c = 1 und d = 2 (= Methoxypropylamin).

Ergänzend wird auf Spalte 3, Seite 3, Zeilen 25 bis 47, der europäischen Patentschrift EP 0 192 304 B1 verwiesen.

Beispiele geeigneter erfindungsgemäß zu verwendender Polyisocyanate sind Diisocyanate, wie Tetramethylen-1,4-diisocyanat, Hexamethylen-1,6-diisocyanat, 2,2,4-Trimethylhexamethylen-1,6-diisocyanat, omega,omega'-Dipropyl-äther-diisocyanat, Cyclohexyl-1,4-diisocyanat, Cyclohexyl-1,3-diisocyanat, Cyclohexyl-1,2-diisocyanat, Dicyclohexylmethan-4,4'-diisocyanat, 1,5-Dimethyl-2,4-di(isocyanato-methyl)-benzol, 1,5-Di-methyl-2,4-di(isocyanatoethyl)-benzol, 1,3,5-Trimethyl-2,4-di(isocyanatomethyl)-benzol, 1,3,5-Triethyl-2,4-di(isocyanatomethyl)-benzol, Isophorondiisocyanat, Dicyclohexyldimethylmethan-4,4'-diisocyanat, 2,4-Toluylendüsocyanat, 2,6-Toluylendiisocyanat, Diphenylmethan-4,4'-diisocyanat.

Es können auch Polyisocyanate auf der Basis der vorstehend beschriebenen Diisocyanate verwendet werden. Die entsprechenden Polyisocyanate sind Oligomere, die Isocyanurat-, Biuret-, Allophanat-, Iminooxadiazindion-, Urethan-, Carbodiimid-, Harnstoff- und/oder Uretdiongruppen enthalten. Beispiele geeigneter Herstellungsverfahren sind beispielsweise aus den Patentschriften und Patentanmeldungen CA 2,163,591 A1, US 4,419,513 A, US 4,454,317 A, EP 0 646 608 A1, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A, US 5,290,902 A, EP 0 649 806 A1, DE 42 29 183 A1 oder EP 0 531 820 A1 bekannt.

Ganz besonders bevorzugt werden die Oligomeren von Hexamethylendiisocyanat und von Isophorondiisocyanat verwendet.

Die vorstehend beschriebenen Oligomere haben vorteilhafterweise eine NCO-Funktionalität von 2,0 - 5,0, vorzugsweise von 2,2 - 4,0, insbesondere von 2,5 - 3,8.

Weitere Beispiele geeigneter Polyisocyanate sind
Ia) Isocyanate mit mindestens einer Diisocyanat-Struktureinheit, welche
   i) eine ungesättigte bzw. aromatische oder nicht aromatische Ringstruktur mit 5 - 10 Ringatomen und
   ii) zwei an die Ringstruktur gebundene Isocyanatgruppen aufweist, wobei
   iii) im Falle einer nicht aromatischen Ringstruktur
      a) beide Isocyanatgruppen über lineares C₁-C₉-Alkyl und/oder lineares C₂-C₁₀-Etheralkyl oder
      b) eine Isocyanatgruppe direkt und die andere über lineares C₂-C₉-Alkyl und/oder lineares C₂-C₁₀-Etheralkyl und
   iv) im Fall einer ungesättigten aromatischen Ringstruktur mindestens eine der beiden Isocyanatgruppen über lineares C₂-C₉-Alkyl und/oder lineares C₂-C₁₀-Etheralkyl, welche beiden Reste keine benzylischen Wasserstoffatome aufweisen, mit der Ringstruktur verbunden ist oder sind;
   und/oder
Ib) zumindest ein Oligomer dieses Isocyanats Ia) mit 2 bis 10 Isocyanateinheiten, insbesondere ein Trimer;
   und/oder
Ic) mindestens ein partiell blockiertes Isocyanat Ia) und/oder mindestens ein partiell blockiertes Oligomer Ib).

Die Isocyanate Ia) können zwei oder mehr dieser Diisocyanat-Struktureinheiten aufweisen, indes hat es sich bewährt, nur eine zu verwenden.

Bezüglich der Diisocyanat-Struktureinheit des Diisocyanats Ia) bestehen verschiedene Möglichkeiten der weiteren Ausbildung, die folgend beschrieben werden.

Hinsichtlich der Ringstruktur (i) ist es grundsätzlich möglich, daß es sich um Heteroringe handelt. Dann enthält die Ringstruktur (i) neben C-Atomen als Ringatome auch davon verschiedene Ringatome, wie beispielsweise N-Atome, O-Atome oder Si-Atome. Hierbei kann es sich um gesättigte oder ungesättigte bzw. aromatische Heteroringe handeln. Beispiele geeigneter gesättigter Heteroringe sind die Silacyclopentan-, Silacyclohexan-, Oxolan-, Oxan-, Dioxan-, Morpholin-, Pyrrolidin-, Imidazolidin-, Pyrazolidin-, Piperidin- oder Chinuklidinringe. Beispiele geeigneter ungesättigter bzw. aromatischer Heteroringe sind Pyrrol-, Imidazol-, Pyrazol-, Pyridin-, Pyrimidin-, Pyrazin-, Pyridazin- oder Triazinringe. Bevorzugt ist es, wenn die Ringstruktur (i) als Ringatome ausschließlich C-Atome enthält.

Die Ringstruktur (i) kann einerseits brückenfrei sein. In dem Fall, daß die Ringstruktur (i) ein bicyclisches Terpen-Grundgerüst, Decalin, Adamantan oder Chinuklidin ist, können jedoch Brücken enthalten sein. Beispiele geeigneter Terpen-Grundgerüste sind Caran-, Norcaran-, Pinan-, Camphan- oder Norbonan-Grundgerüste.

Die Wasserstoffatome einer Diisocyanat-Struktureinheit Ia), insbesondere der Ringstruktur (i), können durch Gruppen oder Atome substituiert sein, welche weder mit Isocyanaten noch mit dem Amin und/dem Bindemittel reagieren. Beispiele geeigneter Gruppen sind Nitro-, Alkyl-, Cycloalkyl-, Perfluoralkyl-, Perfluorcycloalkyl- oder Arylgruppen. Beispiele geeigneter Atome sind Halogenatome, insbesondere Fluor.

Vorteilhafterweise besteht die Ringstruktur (i) aus 6 C-Atomen, insbesondere in Form von Cyclohexan oder Benzol.

Beispiele für geeignetes lineares C₁-C₉-Alkyl sind Methylen- oder Ethylen- sowie Tri, Tetra-, Penta-, Hexa-, Hepta-, Octa- oder Nonamethylenreste, insbesondere Methylenreste.

Die linearen C₂-C₁₀-Etheralkyle sind entweder über die Sauerstoffatome oder über die darin enthaltenen Alkandiylreste mit der Ringstruktur verbunden. Vorzugsweise sind sie über die Sauerstoffatome hiermit verbunden. Die Indices 2 bis 10 bedeuten, daß 2 bis 10 C-Atome in den Etheralkylen enthalten sind.

Die Etheralkyle können nur 1 Sauerstoffatom enthalten. Es ist von Vorteil, wenn 2 bis 10, insbesondere 2 bis 5 Sauerstoffatome in der Kette vorhanden ist. Dann befinden sich 1 oder mehr, insbesondere aber 2, C-Atome zwischen 2 Sauerstoffatomen.

Beispiele geeigneter C₂-C₁₀-Etheralkyle sind
-(O-CH₂)ₘ-, worin m = 1 bis 10,
-(O-C₂H₄)ₚ-, worin p = 1 bis 5,
-(O-C₃H₆)_{q}-, worin q = 1 bis 3 oder
-(O-C₄H₈)ᵣ-, worin r = 1 bis 2.

Wenn das Isocyanat Ia) zumindest eine Diisocyanat-Struktureinheit mit einer nicht aromatischen Ringstruktur (i), insbesondere Cyclohexan, enthält, können beide Isocyanatgruppen über -CH₂-, vorzugsweise an die Positionen 1 und 3 des Ringstruktur gebunden sein. Es ist aber auch eine Bindung an die Positionen 1,2 und 1,4 möglich. Die Diisocyanat-Struktureinheit bzw. das Isocyanat Ia) hat dann beispielsweise die Formel C₆H₁₀(-CH₂-NCO)₂.

Es ist aber auch möglich, daß eine der beiden Isocyanatgruppen unmittelbar an ein Ringatom einer nicht aromatischen Ringstruktur (i), insbesondere Cyclohexan, gebunden ist und daß die zweite Isocyanatgruppe über C₂-C₉-Alkyl, insbesondere C₃- Alkyl an eine weiteres Ringatom, vorzugsweise in 1,2-Konfiguration, gebunden ist. Die Diisocyanat-Struktureinheit bzw. das Isocyanat Ia) hat dann beispielsweise die Formel C₆H₁₀(-NCO)(-C₃H₆-NCO).

Wenn das Isocyanat Ia) zumindest eine Diisocyanat-Struktureinheit mit einer ungesättigten oder aromatischen Ringstruktur (i), insbesondere Benzol, enthält, können beide Isocyanatgruppen über C₂-C₉-Alkyl hiermit verbunden sein. Wichtig ist, daß die Alkandiylreste keine benzylischen Wasserstoffatome enthalten, sondern an deren Stelle Substituenten R¹ und R² tragen, welche weder mit Isocyanaten noch mit dem Amin oder dem Bindemittel reagieren. Beispiele geeigneter Substituenten R¹ und R² sind C₁-C₁₀-Alkyl, Aryl- oder Halogen, vorzugsweise -CH₃.

Beispiele geeigneter Alkandiylgruppen sind demnach -CR¹R²-(CH₂)ₙ-, worin n = 1 bis 8, insbesondere 1 bis 4, und R¹ und R² = die vorstehend angegebenen Substituenten.

Die vorstehend beschriebenen Alkandiylgruppen sind vorzugsweise an die Positionen 1 und 3 des Benzolrings gebunden. Es ist indes auch in diesem Fall eine Bindung an die Positionen 1,2 und 1,4 möglich. Die Düsocyanat-Struktureinheit bzw. das erfindungsgemäß zu verwendende Isocyanat Ia) hat dann beispielsweise die Formel C₆H₄(-C(CH₃)₂-C₂H₄-NCO)₂.

Die beiden Isocyanatgruppen können indes auch über die vorstehend beschriebenen C₂-C₁₀-Etheralkyle mit dem ungesättigten oder aromatischen Ringstruktur, insbesondere Benzol, verbunden sein. Wichtig ist, daß die Etheralkyle keine benzylischen Wasserstoffatome tragen. Dies kann im Falle, daß die Etheralkyle über C-Atome mit dem aromatischen Ringstruktur verknüpft sind, dadurch erreicht werden, daß die benzylischen C-Atome die vorstehend beschriebenen Substituenten R¹ und R² tragen. Wenn die Etheralkyle über Sauerstoffatome mit dem aromatischen Ringstruktur verknüpft sind, sind keine benzylischen Wasserstoffatome vorhanden, weswegen diese Variante bevorzugt wird.

Es ist auch hier möglich, daß eine der beiden Isocyanatgruppen unmittelbar an ein Ringatom einer ungesättigten oder aromatischen Ringstruktur (i), vorzugsweise eines Benzolrings, gebunden ist und daß die zweite Isocyanatgruppe beispielsweise über C₃-C₉-Alkyl, welches keine benzylischen Wasserstoffatome aufweist, an eine weiteres Ringatom, vorzugsweise in 1,2-Konfiguration, gebunden ist. Die Diisocanat-Struktureinheit bzw. das erfindungsgemäß zu verwendende Isocyanat Ia) hat dann beispielweise die Formel C₆H₄(-NCO)(-C(CH₃)₂-(CH₂)₂-NCO).

Anstelle des Isocyanats Ia) oder zusätzlich zu diesem kann mindestens ein Oligomer Ib) verwendet werden. Das Oligomer Ib) wird hergestellt aus dem Isocyanat Ia), wobei vorteilhafterweise 2 bis 10 Monomereinheiten umgesetzt werden und wobei die Trimerisierung besonders bevorzugt wird. Die Oligomerisierung und Trimersierung kann mit Hilfe üblicher und bekannter geeigneter Katalysatoren zur Bildung von Uretdion-, Biuret-, Isocyanurat-, Iminooxadiazindion-, Harnstoff und/oder Allophanatgruppen führen. Eine Oligomerisierung ist aber auch möglich durch Umsetzung mit niedermolekularen Polyolen wie Trimethylolpropan oder Homotrimethylolpropan, Glycerin, Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexan-diol-1,6, die, sofern erforderlich, ggf. partiell ethoxyliert und/oder propoxyliert oder anderweitig hydrophiliert sind.

Zusätzlich zu den Diisocyanaten und/oder ihren Oligomeren und/oder den Isocyanaten Ia) und/oder ihren Oligomeren Ib) können mindestens ein partiell blockiertes Diisocyanat und/oder sein partiell blockiertes Oligomer und/oder mindestens ein partiell blockiertes Isocyanat Ia) und/oder sein partiell blockiertes Oligomer Ib) (= Isocyanat Ic)) verwendet werden. Des weiteren können anstelle der Diisocyanate und/oder ihrer Oligomeren und/oder der Isocyanate Ia) und/oder ihrer Oligomeren Ib) mindestens ein partiell blockiertes Oligomer und/oder mindestens ein partiell blockiertes Oligomer Ib) (= Isocyanat Ic)) verwendet werden.

Ergänzend wird auf Seite 3, Zeilen 10 bis 51, der deutschen Patentschrift DE 198 11 471 A1 oder auf Seite 8, Zeilen 4 bis 23, der internationalen Patentanmeldung WO 94/22968 verwiesen.

Beispiele geeigneter Blockierungsmittel sind die aus der US-Patentschrift US 4,444,954 A bekannten Blockierungsmittel wie i) Phenole wie Phenol, Cresol, Xylenol, Nitrophenol, Chlorophenol, Ethylphenol, t-Butylphenol, Hydroxybenzoesäure, Ester dieser Säure oder 2,5-di-t-Butyl-4-hydroxy-toluol; ii) Lactame, wie Caprolactam, Valerolactam, Butyrolactam oder Propiolactam; iii) aktive methylenische Verbindungen, wie Diethylmalonat, Dimethylmalonat, Ethylacetoacetat, Methylacetoacetat oder Acetylaceton; iv) Alkohole wie Methanol, Ethanol, n-Propanol, Isopropanol, n-Butanol, Isobutanol, t-Butanol, n-Amylalkohol, t-Amylalkohol, Laurylalkohol, Ethylen- glykolmonomethylether, Ethylenglykolmonoethylether, Ethylenglykolmonopropylether, Ethylenglykolmonobutylether, Diethylenglykolmonomethyl-ether, Diethylenglykohnonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol oder Acetocyanhydrin; v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol; vi) Säureamide wie Acetoanilid, Acetoanisidinamid, Acrylamid, Methacrylamid, Essigsäureamid, Stearinsäureamid oder Benzamid; vii) Imide wie Succinimid, Phthalimid oder Maleimid; viii) Amine wie Diphenylamin, Phenylnaphthylamin, Xylidin, N-Phenylxylidin, Cabazol, Anilin, Naphthylamin, Butylamin, Dibutylamin oder Butylphenylamin; ix) Imidazole wie Imidazol oder 2-Ethylimidazol, x) Harnstoffe wie Harnstoff, Thioharnstoff, Ethylenharnstoff, Ethylenthioharnstoff oder 1,3-Diphenylharnstoff; xi) Carbamate wie N-Phenylcarbamidsäurephenylester oder 2-Oxazolidon; xii) Imine wie Ethylenimin, xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime; xiv) Salze der schwefeligen Säure wie Natriumbisulfit oder Kaliumbisulfit; xv) Hydroxamsäureester wie Benzylmethacrylohydroxamat (BMH) oder Allylmethacrylohydroxamat oder xvi) substituierte Pyrazole, Imidazole oder Triazole.

Die vorstehend beschriebenen Oligomere Ib) haben vorteilhafterweise ebenfalls eine NCO-Funktionalität von 2,0 - 5,0, vorzugsweise von 2,2 - 4,0, insbesondere von 2,5 - 3,8.

Bei der Herstellung des erfindungsgemäßen Thixotropierungsmittels kann noch mindestens einer der nachstehend beschriebenen Bestandteile der erfindungsgemäßen Beschichtungsstoffe, Klebstoffe und Dichtungsmassen zugegen sein, insbesondere mindestens ein Bindemittel (vgl. Römpp Lexikon Lacke und Druckfarben, Georg Thieme Verlag, Stuttgart, New York, 1998, »Bindemittel«, Seiten 73 und 74), mindestens einer der thermisch härtbaren, hydroxylgruppenhaltigen Reaktivverdünner wie sie in den Patentanmeldungen DE 198 09 643 A1, DE 198 40 605 A1 oder DE 198 05 421 A1 beschrieben werden und/oder mindestens ein in der deutschen Patentschrift DE 198 11 471 A1, Seite 3, Zeile 52, bis Seite 5, Zeile 4, beschriebenes Polyol.

Des weiteren kann das erfindungsgemäße Thixotropierungsmittel mindestens eine Kieselsäure enthalten. Hydrophile und hydrophobe Kieselsäuren sind käuflich erwerblich beispielsweise unter dem Handelsnamen Aerosil^{®} und unter den Produktbezeichnungen 200, R972, R974, R805 und R812 von der Firma Degussa AG, Hanau.

Darüber hinaus kann das erfindungsgemäße Thixotropierungsmittel noch mindestens ein Netzmittel enthalten. Beispiele geeigneter Netzmittel sind aus der Patentanmeldung EP 0 154 678 A1 bekannt oder werden unter den Handelbezeichnungen Disperbyk® 161 von der Firma Byk, Borchigel® von der Firma Bayer AG und Tego Disperse® 710 von der Firma Tego Chemie Services vertrieben.

Das erfindungsgemäße Thixotropierungsmittel dient der Herstellung von erfindungsgemäßen Beschichtungsstoffen, Klebstoffen und Dichtungsmassen, insbesondere lösemittelhaltigen erfindungsgemäßen Beschichtungsstoffen, Klebstoffen und Dichtungsmassen. Hierbei zeigt sich der besondere Vorteil der erfindungsgemäßen Thixotropierungsmittel, daß sie nämlich die Herstellung von erfindungsgemäßen Beschichtungsstoffen, Klebstoffen und Dichtungsmassen gestatten, die einen besonders hohen Festkörpergehalt mit dem entsprechend geringen Gehalt an leicht flüchtigen organischen Bestandteilen aufweisen und sich dabei noch immer sehr gut applizieren lassen. Vorzugsweise liegt der Festkörpergehalt, bezogen auf den jeweiligen erfindungsgemäßen Beschichtungsstoff oder Klebstoff oder die jeweilige Dichtungsmasse, bei mindestens 35, bevorzugt mindestens 40, besonders bevorzugt mindestens 45, ganz besonders bevorzugt 50 und insbesondere mindestens 55 Gew.-%.

Methodisch gesehen bietet die Herstellung des erfindungsgemäßen Thixotropierungsmittels keine Besonderheiten, sondern erfolgt kontinuierlich oder diskontinuierlich in üblichen und bekannten Vorrichtungen wie Rührkessel, Ultraturrax oder In-line-Dissolver in einem vergleichsweise hohen Scherfeld. Vorzugsweise werden herbei die Amine in dem organischen Medium vorgelegt und die Polyisocyanate zudosiert.

Der Gehalt der erfindungsgemäßen Beschichtungsstoffe, Klebstoffe und Dichtungsmassen an den erfindungsgemäßen Thixotropierungsmitteln kann sehr breit variieren. Nach unten ist er lediglich dadurch begrenzt, daß das erfindungsgemäße Thixotropierungsmittel in einer solchen Menge zugegeben werden muß, daß sich seine vorteilhaften technischen Effekte noch in dem gewünschten und erforderlichen Ausmaß einstellen. Nach oben ist er dadurch begrenzt, daß die Viskosität der erfindungsgemäßen Beschichtungsstoffe, Klebstoffe und Dichtungsmassen nicht so hoch werden darf, daß eine problemlose Applikation und ein sehr guter Verlauf nicht mehr länger gewährleistet sind. Das erfindungsgemäße Thixotropierungsmittel wird vorzugsweise in einer Menge von 0,1 bis 25 Gew.-%, bevorzugt 0,2 bis 23 Gew.-%, insbesondere 0,6 bis 20 Gew.-%, jeweils bezogen auf den gesamten erfindungsgemäßen Beschichtungsstoff oder Klebstoff oder die gesamte erfindungsgemäße Dichtungsmasse, eingesetzt.

Ganz besondere Vorteile resultieren bei der Verwendung des erfindungsgemäßen Thixotropierungsmittels zur Herstellung der erfindungsgemäßen Beschichtungsstoffe, insbesondere der erfindungsgemäßen pigmentierten Unidecklacke oder Basislacke oder der erfindungsgemäßen unpigmentierten Klarlacke. Die vorteilhafte technische Wirkung der erfindungsgemäßen Thixotropierungsmittel werden deshalb beispielhaft anhand der erfindungsgemäßen Beschichtungsstoffe untermauert.

Die nachstehend beschriebenen Bestandteile des erfindungsgemäßen Beschichtungsstoffs können auch in den erfindungsgemäßen Klebstoffen und Dichtungsmassen enthalten sein. Ebenso können die Verfahren zu seiner Applikation und seine Härtung auch auf die erfindungsgemäßen Klebstoffe und Dichtungsmassen übertragen werden.

Der erfindungsgemäße Beschichtungsstoff ist thermisch und mit aktinischer Strahlung härtbar. Dies wird von der Fachwelt auch als "Dual Cure" bezeichnet. Dabei ist er thermisch selbstvernetzend oder fremdvernetzend.

Im Rahmen der vorliegenden Erfindung bezeichnet der Begriff "selbstvernetzend" die Eigenschaft eines Bindemittels mit "sich selbst" Vernetzungsreaktionen einzugehen. Voraussetzung hierfür ist, daß in den Bindemitteln bereits beide Arten von komplementären reaktiven funktionellen Gruppen enthaltend sind, die für eine Vernetzung notwendig sind, oder reaktive funk-tionelle Gruppen, die "mit sich selbst" reagieren. Als fremdvernetzend werden dagegen solche Beschichtungsstoffe bezeichnet, worin die eine Art der komplementären reaktiven funktionellen Gruppen in dem Bindemittel und die andere Art in einem Härter oder Vernetzungsmittel vorliegen. Ergänzend wird auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Der erfindungsgemäße Beschichtungsstoff ist ein Einkomponentensystem.

Im Rahmen der vorliegenden Erfindung ist unter einem Einkomponentensystem ein thermisch und mit aktinischer Strahlung härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Der erfindungsgemäße Beschichtungsstoff ist ein Zwei- oder Mehrkomponentensystem.

Im Rahmen der vorliegenden Erfindung werden unter Zwei- oder Mehrkomponentensystemen Beschichtungsstoffe verstanden, deren Vernetzungsmittel aufgrund seiner hohen Reaktivität bis zur Applikation getrennt von übrigen Bestandteilen der Beschichtungsstoffe aufbewahrt werden muß.

Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R^{'} und R^{"} stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

| | |
|---|---|
| **Selbstvernetzendes Bindemittel** | |
| **oder** | |
| **Bindemittel und Vernetzungsmittel** | |
| **oder** | |
| **Vernetzungsmittel und Bindemittel** | |
| -SH | -C(O)-OH |
| -NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| >NH | -CH₂-O-R |
| | -NH-CH₂-O-R |
| | -NH-CH₂-OH |
| | -N(-CH₂-O-R)₂ |
| | -NH-C(O)-CH(-C(O)OR)₂ |
| | NH-C(O)-CH(-C(O)OR)(-C(O)-R) |
| | -NH-C(O)-NR'R" |
| | > Si(OR)₂ |
| | 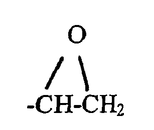 |
| | 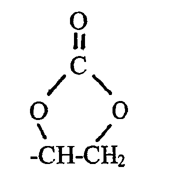 |
| -C(O)-OH | 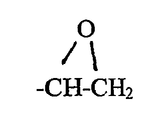 |
| | -N=C=N- |
| | -C(O)-N(CH₂-CH₂-OH)₂ |

Die Auswahl der jeweiligen komplementären reaktiven funktionellen Gruppen richtet sich zum einen danach, daß sie bei der Herstellung, der Lagerung und der Applikation der erfindungsgemäßen Beschichtungsstoffe keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Einkomponentensystemen Vernetzungstemperaturen von 100 bis 180°C angewandt. Es werden daher vorzugsweise Bindemittel (A) mit Thio-, Hydroxyl-, N-Methylolamino- N-Alkoxymethylamino-, Imino-, Carbamat-, Allophanat- und/oder Carboxylgruppen, bevorzugt Hydroxylgruppen, einerseits und vorzugsweise Vernetzungsmittel (D) mit Anhydrid-, Carboxyl-, Epoxy-, blockierten Isocyanat-, Urethan-, Methylol-, Methylolether-, Siloxan-, Carbonat-, Amino-, Hydroxy- und/oder beta-Hydroxyalkylamidgruppen, bevorzugt blockierte Isocyanat-, Urethan- oder Alkoxymethylaminogruppen, andererseits angewandt.

Im Falle selbstvernetzender erfindungsgemäßer Beschichtungsstoffe enthalten die Bindemittel (A) insbesondere Methylol-, Methylolether- und/oder N-Alkoxymethylaminogruppen.

Beispiele geeigneter Bindemittel sind thermisch härtbare, statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Die genannten Bindemittel können darüber hinaus auch noch die vorstehend beschriebenen funktionellen Gruppen mit mindestens einer mit aktinischer Strahlung aktivierbaren Bindung enthalten. Hierdurch werden die Bindemittel thermisch und mit aktinischer Strahlung härtbar (Dual Cure).

Beispiele gut geeigneter Bindemittel sind hydroxylgruppenhaltige lineare und/oder verzweigte und/oder blockartig, kammartig und/oder statistisch aufgebaute Poly(meth)acrylate oder Acrylatcopolymerisate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe. Von diesen sind die Acrylatcopolymerisate und die Polyester von Vorteil und werden erfindungsgemäß bevorzugt verwendet. Beispiele ganz besonders bevorzugter Acrylatcopolymerisate werden in der internationalen Patentanmeldung WO 94/22968, Seite 2, Zeile 26, bis Seite 7, Zeile 5, beschrieben.

Zusätzlich zu den vorstehend beschriebenen Dual Cure-Bindemitteln können auch rein mit aktinischer Strahlung härtbare Bindemittel wie (meth)acrylfunktionelle (Meth)Acrylatcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate verwendet werden.

Der Gehalt der erfindungsgemäßen Beschichtungsstoffe an den Bindemittel kann sehr breit variieren und richtet sich in erster Linie nach dem Verwendungszweck des jeweiligen erfindungsgemäßen Beschichtungsstoffs. Vorzugsweise sind die Bindemittel in einer Menge von, bezogen auf den gesamten Festkörper des Beschichtungsstoffs, 5,0 bis 95, bevorzugt 10 bis 90, besonders bevorzugt 15 bis 85, ganz besonders bevorzugt 20 bis 80 und insbesondere 25 bis 75 Gew.-% enthalten.

Der erfindungsgemäße Beschichtungsstoff enthält mindestens ein Vernetzungsmittel. Sie enthalten die vorstehend beschriebenen komplementären reaktiven funktionellen Gruppen.

Beispiele geeigneter Vernetzungsmittel, die insbesondere in Einkomponentensystemen verwendet werden sind, sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A1 oder EP-B-0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A1 beschrieben werden, Epoxidgruppen enthaltende Verbindungen oder Harze, wie sie beispielsweise in den Patentschriften EP 0 299 420 A1, DE 22 14 650 B1, DE 27 49 576 B1, US 4,091,048 A1 oder US 3,781,379 A1 beschrieben werden, blockierte Polyisocyanate, wie sie beispielsweise in den Patentschriften US 4,444,954 A1, DE 196 17 086 A1, DE 196 31 269 A1 oder EP 0 004 571 A1 beschrieben werden, und/oder Tris(alkoxycarbonylamino)-triazine, wie sie in den Patentschriften US 4,939,213 A1, US 5,084,541 A1, US 5,288,865 A1 oder EP 0 604 922 A1 beschrieben werden. Beispiele geeigneter Blockierungsmittel und geeigneter Polyisocyanate sind die vorstehend beschriebenen.

Beispiele geeigneter Vernetzungsmittel, die insbesondere in Zwei- oder Mehrkomponentensystemen eingesetzt werden, sind die vorstehend beschriebenen Polyisocyanate. Außerdem sind Polyisocyanate geeignet, die neben den freien Isocyanatgruppen mindestens eine der vorstehend beschriebenen aktivierbaren funktionellen Gruppen aufweisen. Bekanntermaßen werden diese Dual Cure-Polyisocyanate durch die Umsetzung von Polyisocyanaten mit mindestens einer Verbindung, die mindestens eine isocyanatreaktive funktionelle Gruppe, insbesondere eine Hydroxyl Gruppe, und mindestens eine der vorstehend beschriebenen aktivierbaren funktionellen Gruppen enthält, hergestellt.

Beispiele geeigneter Verbindungen dieser Art sind
- Allylalkohol oder 4-Butylvinylether;
- Hydroxyalkylester der Acrylsäure oder der Methacrylsäure, insbesondere der Acrylsäure, die durch Veresterung aliphatischer Diole, beispielsweise der vorstehend beschriebenen niedermolekularen Diole B), mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxymethyl)cyclohexanacrylat oder - methacrylat; von diesen sind 2-Hydroxyethylacrylat und 4-Hydroxybutylacrylat besonders vorteilhaft und werden deshalb erfindungsgemäß besonders bevorzugt verwendet; oder
- Umsetzungsprodukte aus cyclischen Estern, wie z.B. epsilon-Caprolacton, und diesen Hydroxyalkyl- oder -cycloalkylestern.

Die Polyisocyanate werden mit diesen Verbindungen in einem Molverhältnis umgesetzt, daß im statistischen Mittel noch mindestens eine, vorzugsweise mindestens zwei, bevorzugt mindestens drei, besonders bevorzugt mindestens vier, ganz besonders bevorzugt mindestens fünf und insbesondere sechs freie Isocyanatgruppe(n) pro Molekül verbleibt oder verbleiben.

Des weiteren kann der erfindungsgemäße Beschichtungsstoff farb- und/oder effektgebende Pigmente (vgl. Römpp Lexikon Lacke und Druckfarben, Georg Thieme Verlag, Stuttgart, New York, 1998, »Effektpigmente«, Seite 176, »Metalloxid-Glimmer-Pigmente« bis »Metallpigmente«, Seiten 380 und 381, »Eisenblau-Pigmente« bis »Eisenoxidschwarz«, Seiten 180 und 181, »Pigmente« bis »Pigmentsvolumenkonzentration«, Seiten 451 bis 453, »Thioindigo-Pigmente«, Seite 563, und »Titandioxid-Pigmente«, Seite 567); organische und anorganische, transparente oder opake Füllstoffe (vgl. Römpp Lexikon Lacke und Druckfarben, Georg Thieme Verlag, 1998, »Füllstoffe«, Seiten 250 ff.); Nanopartikel; die vorstehend beschriebenen thermisch härtbaren Reaktivverdünner; zusätzliche mit aktinischer Strahlung härtbare Reaktiverdünner (vgl. Römpp Lexikon Lacke und Druckfarben, Georg Thieme Verlag, Stuttgart, New York, 1998, »Reaktivverdünner« Seiten 491 und 492); UV-Absorber; Lichtschutzmittel; Radikalfänger; thermolabile radikalische Initiatoren; Photoinitiatoren, wie die in Römpp Lexikon Lacke und Druckfarben, Georg Thieme Verlag Stuttgart, 1998, Seiten 444 bis 446, beschriebenen; Katalysatore für die thermische Vernetzung; Entlüftungsmittel; Slipadditive; Polymerisationsinhibitoren; Entschäumer; Emulgatoren; Netz- und Dipergiermittel; Haftvermittler; Verlaufmittel; filmbildende Hilfsmittel; rheologiesteuemden Additive (Verdicker); Flammschutzmittel; Sikkative; Trockungsmittel; Hautverhinderungsmittel; Korrosionsinhibitoren; Wachse und Mattierungsmittel enthalten.

Weitere Beispiele geeigneter Zusatzstoffe der vorstehend beschriebenen Art werden in dem Lehrbuch »Lackadditive« von Johan Bieleman, Wiley-VCH, Weinheim, New York, 1998, im Detail beschrieben.

Die Zusatzstoffe werden in üblichen und bekannten, wirksamen Mengen verwendet. Die erfindungsgemäßen Klarlacke enthalten selbstverständlich keine farb- und/oder effektgebenden Pigmente oder deckenden Füllstoffe.

Die vorstehend beschriebenen Bindemittel und Zusatzstoffe können auch in den erfindungsgemäßen Klebstoffen und Dichtungsmassen enthalten sein, sofern sie hierfür geeignet sind, was der Fachmann leicht anhand seines allgemeinen Fachwissens feststellen kann.

Die Herstellung der erfindungsgemäßen Beschichtungsstoffe weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder.

Der erfindungsgemäße Beschichtungsstoff ist hervorragend für die Herstellung von farb- und/oder effektgebenden Mehrschichtlackierungen auf grundierten und ungrundierten Substraten nach dem Naß-in-naß-V erfahren geeignet. Des weiteren ist der erfindungsgemäße Beschichtungsstoff, insbesondere der erfindungsgemäße Unidecklack, hervorragend für die Herstellung von einschichtigen farb- und/oder effektgebenden Lackierungen geeignet.

Besondere Vorteile entfaltet der erfindungsgemäße Beschichtungsstoff in seiner Verwendung als erfindungsgemäßer Klarlack im Rahmen des Naß-in-naß-Verfahrens bei dem ein Basislack auf das grundierte oder ungundierte Substrat appliziert und getrocknet, indes nicht gehärtet wird, wonach man auf die Basislackschicht den Klarlack appliziert und die resultierende Klarlackschicht gemeinsam mit der Basislackschicht thermisch und mit aktinischer Strahlung (Dual Cure) härtet.

Als Substrate kommen alle zu lackierenden Oberflächen, die durch eine Härtung der hierauf befindlichen Schichten unter der kombinierten Anwendung von Hitze und aktinischer Strahlung (Dual Cure) nicht geschädigt werden, in Betracht.

Geeignete Substrate bestehen insbesondere aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien.

Demnach sind die erfindungsgemäßen Mehrschichtlackierungen auch für Anwendungen außerhalb der Automobilerstlackierung und der Autoreparaturlackierung geeignet. Hierbei kommen sie insbesondere für die Lackierung von Möbeln, Türen und Fenstern, von Bauwerken im Innen- und Außenbereich und für die industrielle Lackierung, inklusive Coil Coating und Container Coating oder die Beschichtung elektrotechnischer Bauteile, in Betracht. Im Rahmen der industriellen Lackierung eignen sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder Spulen oder Wicklungen von Statoren und Rotoren von Elektromotoren.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Üblicherweise wird, insbesondere in der Automobillackierung, hierauf noch eine Füllerlackierung oder Steinschlagschutzgrundierung aufgetragen, die als Bestandteil der Grundierung angesehen werden kann.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation der erfindungsgemäßen Beschichtungsstoffe kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird. Enthalten die erfindungsgemäßen Klarlacke Bestandteile, die mit aktinischer Strahlung aktivierbar sind, wird die Applikation vorzugsweise unter Ausschluß von Licht durchgeführt.

Selbstverständlich können diese Applikationsmethoden im Rahmen des erfindungsgemäßen Naß-in-naß-Verfahrens auch für die Applikation der Füller oder Steinschlagschutzgrundierungen und der Basislacke sowie im Rahmen der Unidecklackierung für die Unidecklacke verwendet werden.

Die applizierten Basislackschichten und Klarlackschichten können in üblicher und bekannter Weise - gegebenenfalls nach einer gewissen Ruhezeit, die dem Verlauf der Schichten und/oder dem Verdampfen flüchtiger Bestandteile dient- thermisch oder thermisch und mit aktinischer Strahlung gehärtet werden.

Methodisch weist die thermische Härtung keine Besonderheiten auf, sondern es werden die üblichen und bekannten Temperaturen im Bereich von Raumtemperatur bis 200, vorzugsweise 190, bevorzugt 180, besonders bevorzugt 170, ganz besonders bevorzugt 160 und insbesondere 150°C angewandt. Die Härtungstemperaturen richten sich zum einen danach, ob es sich um ein Einkomponenten oder um ein Zwei- oder Mehrkomponentensystem handelt, und zum anderen nach der thermischen Stabilität des jeweils verwendeten Substrats. In jedem Fall muß aber eine Härtungstemperatur angewandt werden, die sicherstellt, daß die Harnstoffkristalle des erfindungsgemäßen Thixotropierungsmittels vor und/oder bei der Härtung aufschmelzen, sodaß sie nicht zu Trübungen und anderen Störungen in den erfindungsgemäßen Lackierungen führen können.

Vorzugsweise werden Härtungszeiten im Bereich von einer Minute bis drei Stunden und Vorrichtungen wie Heizstrahler oder Umluftöfen angewandt.

Auch die Härtung mit aktinischer Strahlung weist keine methodischen Besonderheiten auf, sondern erfolgt in üblicher und bekannter Weise durch Bestrahlen mit UV-Lampen und/oder Elektronenstrahlquellen vorzugsweise unter Inertgas. Vorzugsweise wird eine Dosis von 1.000 bis 2.000, bevorzugt 1.100 bis 1.900, besonders bevorzugt 1.200 bis 1.800, ganz besonders bevorzugt 1.300 bis 1.700 und insbesondere 1.400 bis 1.600 mJ/cm² angewandt. Die Vorschubgeschwindigkeit beträgt hierbei vorzugsweise 1,0 bis 10, bevorzugt 1,2 bis 9, besonders bevorzugt 1,6 bis 8, ganz besonders bevorzugt 1,8 bis 7 und insbesondere 2,0 bis 6 m/min.

Bei der gemeinsamen Härtung der erfindungsgemäßen Klarlackschichten mit den Basislackschichten können die thermische Härtung und Härtung mit aktinischer Strahlung gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist, aufgrund seines allgemeinen Fachwissens gegebenenfalls unter Zuhilfenahme einfacher Vorversuche ermitteln.

Hierbei zeigt sich als weiterer besonderer Vorteil des erfindungsgemäßen Klarlacke, daß sämtliche üblichen und bekannten Basislacke (vgl. beispielsweise die Patentschriften EP 0 089 497 A1, EP 0 256 540 A1, EP 0 228 003 A1, EP 0 397 806 A1, DE 43 28 092 A1, EP 0 522 420 A1, EP 0 522 419 A1, WO 97/49745, WO 97/49747, EP 0 401 565 A1, EP 0 730 613 B1 oder WO 95/14721) im Rahmen des Naß-in-naß-Verfahrens mit der erfindungsgemäßen Klarlackschicht kombiniert werden können.

Innerhalb der erfindungsgemäßen Mehrschichtlackierung kann die Dicke der einzelnen Schichten breit variieren. Erfindungsgemäß ist es indes von Vorteil, wenn die Basislackschicht eine Dicke von 5 bis 25 µm, insbesondere 7 bis 20 µm, und die Klarlackschicht eine Dicke von 15 bis 120 µm, vorzugsweise 30 bis 80 µm und insbesondere 40 bis 60 µm aufweist.

Die erfindungsgemäßen Beschichtungsstoffe, Klebstoffe und Dichtungsmassen, lassen sich problemlos auf vertikale Flächen applizieren, ohne daß es zu Läufern kommt.

Die mit Hilfe des erfindungsgemäßen Verfahrens hergestellten Beschichtungen, insbesondere die ein- und mehrschichtigen Klarlackierungen und farb- und/oder effektgebenden Lackierungen sind, was Farbe, Effekt, Glanz und D.O.I. (distinctiveness of the reflected image) betrifft, von höchster optischer Qualität, haben eine glatte, strukturfreie, insbesondere von Läufern freie, harte, flexible und kratzfeste Oberfläche, sie sind geruchsfrei und witterungs-, chemikalien- und etch-beständig, vergilben nicht und zeigen keine Rißbildung und Delamination der Schichten.

Die aus den erfindungsgemäßen Klebstoffen hergestellten erfindungsgemäßen Klebschichten sind von besonders hoher Klebkraft, die auch unter rasch wechselnden und/oder extremen klimatischen Bedingungen erhalten bleibt. Gleiches gilt für die aus den erfindungsgemäßen Dichtungsmassen hergestellten Dichtungen hinsichtlich ihrer Dichtungswirkung. Hierbei ist noch ihre Stabilität gegenüber aggressiven Stoffen hervorzuheben.

Die mit den erfindungsgemäßen Beschichtungen beschichteten, mit den erfindungsgemäßen Klebschichten verklebten und/oder den erfindungsgemäßen Dichtungen abgedichteten, grundierten oder ungrundierten Substrate haben daher eine besonders hohe Gebrauchsdauer und einen besonders hohen Gebrauchswert, was sie für Hersteller, Anwender und Endverbraucher gleichermaßen technisch und wirtschaftlich ganz besonders attraktiv macht.

### Beispiele

### Herstellbeispiel 1

### Die Herstellung eines erfindungsgemäß zu verwendenden Bindemittels

In einen Laborreaktor mit einem Nutzvolumen von 4 1, der mit einem Rührer, einem Tropftrichter für den Monomerzulauf und einem Tropftrichter für den Initiatorzulauf, Stickstoffeinleitungsrohr, Thermometer und Rückflußkühler ausgestattete war, wurden 650 Gewichtsteile einer Fraktion aromatischer Kohlenwasserstoffe mit einem Siedebereich von 158 bis 172°C vorgelegt. Das Lösemittel wurde auf 140°C aufgeheizt, wonach bei dieser Temperatur unter Rühren eine Monomermischung aus 652 Gewichtsteilen Ethylhexylacrylat, 383 Gewichtsteilen Hydroxyethylmethacrylat, 143 Gewichtsteilen Styrol, 213 Gewichtsteilen 4-Hydroxybutylacrylat und 21 Gewichtsteilen Acrylsäure während vier Stunden und eine Initiatorlösung aus 113 Gewichtsteilen tert.-Butylperethylhexanoat und 113 Gewichtsteilen des aromatischen Lösemittels während viereinhalb Stunden gleichmäßig zudosiert wurden. Mit den Zuläufen wurde gleichzeitig begonnen. Nach der Beendigung des Initiatorzulaufs wurde die Redaktionsmischung während zwei Stunden bei 140°C gehalten und danach abgekühlt. Die Reaktionsmischung wurde mit einer Mischung aus 1-Methoxypropylacetat-2, Butylglykolacetat und Butylacetat verdünnt. Die resultierende Bindemittellösung wies einen Festkörpergehalt von 65 Gew.-% (1 h / 130°C) und eine Säurezahl von 15 mg KOH/g auf.

### Beispiel 1

### Herstellung eines erfindungsgemäßen Thixotropierungsmittels

In einem geeigneten In-line-Dissolver wurden 459 Gewichtsteile Dipentaerythritpentaacrylat (Sartomer® 399), 11,8 Gewichtsteile Benzylamin und 60 Gewichtsteile Solventnaphtha® eingewogen und während fünf Minuten bei 2.500 Umdrehungen pro Minute vermischt. Zu der Mischung wurden 9,2 Gewichtsteile Hexamethylendiisocyanat in 60 Gewichtsteilen Solventnaphtha® II während zwei Minuten zudosiert. Nach der Fällung der Harnstoffkristalle wurde das Thixotropierungsmittels noch während 15 Minuten bei 2.500 Umdrehungen pro Minute geschert. Es bestand aus 76,5 Gew.-% Dipentaerythritpentaacrylat, 3,5 Gew.-% Harnstoffkristalle und 20 Gew.-% Lösemittel.

### Beispiel 2

### Die Herstellung eines erfindungsgemäßen Zweikomponenten-Klarlacks

Für die Herstellung des erfindungsgemäßen Zweikomponenten-Klarlacks wurden zunächst 35,9 Gewichtsteile der Bindemittellösung gemäß Herstellbeispiel 1, 20 Gewichtsteile des erfindungsgemäßen Thixotropierungsmittels gemäß Beispiel 1, 2,0 Gewichtsteile Irgacure® 184 (handelsüblicher Photoinitiator), 1 Gewichtsteil Genocure® (handelsüblicher Photoinitiator), 0,5 Gewichtsteile Lucirin® TPO (handelsüblicher Photoinitiator), 0,4 Gewichtsteile Byk® 306 (handelsübliches Verlaufmittel), 2 Gewichtsteile Tinuvin® 292 und 400 (handelsübliche Lichtschutzmittel), 27,4 Gewichtsteile Butylacetat und 10,8 Gewichtsteile Solventnaphtha II miteinander vermischt und homogenisiert.

Zu der resultierenden thixotropierten Bindemittelkomponente (100 Gewichtsteile) wurden kurz vor der Applikation 30 Gewichtsteile eines Polyisocyanats mit Acrylatgruppen (Isocyanatoacrylat auf der Basis von Hexamethylendiisocyanat-Trimer und Hydroxyethylacrylat mit einem Isocyanatgehalt von 12 Gew.-% ; Roskydal UA VPLS 2337 der Firma Bayer AG) hinzugegeben, wonach die resultierende Mischung homogenisiert wurde.

### Vergleichsversuch V 1

**Die Herstellung eines nicht erfindungsgemäßen Zweikomponenten-Klarlacks**

Das Beispiel 2 wurde wiederholt, nur daß anstelle des erfindungsgemäßen Thixotropierungsmittels des Beispiels 1 20 Gewichtsteile einer Lösung von 459 Gewichtsteilen Sartomer 399 in 141 Gewichtsteilen Solventnaphtha II verwendet wurden.

### Beispiel 3 und Vergleichsversuch V 2

### Die Herstellung einer erfindungsgemäßen (Beispiel 3) und einer nicht erfindungsgemäßen (Vergleichsversuch V 2) farb- und effektgebenden Mehrschichtlackierung

Zur Herstellung der Prüftafeln aus Karosseriestahlblech für das Beispiel 3 und den Vergleichsversuch V 2 wurden auf die Bleche nacheinander ein Elektrotauchlack mit einer Schichtdicke von 18 bis 22 µm (20 Minuten bei 170°C eingebrannt) und ein Wasserfüller mit einer Schichtdicke von 35 bis 40 µm (20 Minuten bei 160°C eingebrannt) appliziert. Anschließend wurde ein schwarzer Wasserbasislack mit einer Schichtdicke von 12 bis 15 µm aufgetragen und während 15 Minuten bei 80°C abgelüftet.

Anschließend wurde in einer ersten Versuchsserie der erfindungsgemäße Klarlack auf die Wasserbasislackierungen appliziert, wobei die resultierenden Klarlackschichten
- bei Beispiel 3 während 5 Minuten bei Raumtemperatur abgelüftet, während 15 Minuten bei 80°C mit UV-Strahlung (Dosis: 1.500 mJ/cm² ; Vorschubgeschwindigkeit: 4,5 m/min) und während 20 Minuten bei 140°C thermisch gehärtet
wurden.

Für den Vergleichsversuch V 2 wurde Beispiel 3 wiederholt, nur daß anstelle des erfindungsgemäßen Klarlacks des Beispiels 2 der nicht erfindungsgemäße Klarlack des Vergleichsversuchs V 1 verwendet wurde.

Die resultierenden Klarlackierungen wiesen eine Trockenschichtdicke von 40 µm auf. Wichtige anwendungstechnische Eigenschaften der Mehrschichtlackierungen des Beispiels 3 und des Vergleichsversuchs V 2 finden sich in der Tabelle.

**Tabelle: Anwendungstechnische Eigenschaften der erfindungsgemäßen Mehrschichtlackierung des Beispiels 3 und und des Vergleichsversuchs V 2**

| **Eigenschaften** | **Beispiel:** | |
|---|---|---|
| | **Vergleichsversuch:** | |
| | **3** | **V 2** |
| Universalhärte bei 25,6 N | 105,4 | 108,1 |
| Standardabweichung der Universalhärte | 2,9 | 1,4 |
| Verlauf | i.O. | i.O. |
| | | |
| Kocher | keine | keine |
| | | |
| Gitterschnitt mit Tesaabriß nach DIN EN ISO 2409: | GT 0 | GT 0 |
| | | |
| Glanz (20°): | 89,7 | 89,5 |

| | | |
|---|---|---|
| i.O. = in Ordnung | | |

Die Versuchsergebnisse der Tabelle 1 zeigen, daß die erfindungsgemäße Klarlackierung in der vorliegenden Trockenschichtdick der nicht erfindungsgemäßen ebenbürtig ist und alle Anforderungen der Praxis erfüllt.

Der wesentliche Unterschied zwischen der erfindungsgemäßen Klarlackierung und der nicht erfindungsgemäßen Klarlackierung zeigte sich, wenn man in einer zweiten Versuchsserie bei Beispiel 3 den erfindungsgemäßen Klarlack gemäß Beispiel 2 und bei dem Vergleichsversuch V 2 den nicht erfindungsgemäßen Klarlack gemäß Vergleichsversuch V 1 in der Form eines Keils auftrug.

Dazu wurden mittels pneumatischer Applikation mit einer Fließbecherpistole 30 x 60 cm große Bleche mit einer Lochreihe vertikal beschichtet und gehärtet. Gemessen wurde die Schichtdicke, bei der die Läufer, gemessen von der Lochkante, eine Länge von 1 cm erreichen.

Hierbei waren bei der nicht erfindungsgemäßen Klarlackierung des Vergleichsversuchs V 2 ab einer Trockenschichtdicke von 33 µm Läufer von 1 cm zu beobachten. Dagegen war dies bei der erfindungsgemäßen Klarlackierung des Beispiels 3 erst ab einer Trockenschichtdicke von 50 µm der Fall.

## Patentansprüche

1. Harnstoffkristalle enthaltendes Thixotropierungsmittel, enthaltend mindestens eine Verbindung, die mindestens drei funktionelle Gruppen mit mindestens einer mit aktinischer Strahlung aktivierbaren Bindung aufweist.

2. Thixotropierungsmittel nach Anspruch 1, **dadurch gekennzeichnet, dass** es herstellbar Ist, Indem man mindestens ein primäres und/oder sekundäres Amin und/oder Wasser mit mindestens einem Polyisocyanat in einem flüssigen organischen Medium umsetzt, das mindestens eine Verbindung, die mindestens drei funktionelle Gruppen mit mindestens einer mit aktinischer Strahlung aktivierbaren Bindung aufweist, enthält oder das hieraus besteht.

3. Verfahren zur Herstellung eines Harnstoffkristalle enthaltenden Thixotroplerungsmittels durch Umsetzung mindestens eines primären und/oder sekundäre Amins und/oder Wasser mit mindestens einem Polyisocyanat in einem flüssigen organischen Medium, **dadurch gekennzeichnet, dass** das flüssige organische Medium mindestens eine Verbindung enthält, die mindestens drei funktionelle Gruppen mit mindestens einer mit aktinischer Strahlung aktivierbaren Bindung aufweist, enthält oder hieraus besteht.

4. Thixotropierungsmittel nach Anspruch 1 oder 2, **dadurch gekennzeichnet, dass** als aktinischer Strahlung elektromagnetische Strahlung oder Korpuskularstrahlung verwendet wird.

5. Thixotropierungsmittel nach Anspruch 4, **dadurch gekennzeichnet, dass** als elektromagnetische Strahlung nahes Infrarot (NIR), sichtbares Licht, UV-Strahlung und/oder Röntgenstrahlung und als Korpuskularstrahlung Elektronenstrahlung verwendet wird.

6. Thixotropierungsmittel nach einem der Ansprüche 1, 2, 4 oder 5, **dadurch gekennzeichnet, dass** man als mit aktinischer Strahlung aktivierbare Bindungen Bindungen verwendet, die bei Bestrahlen mit aktinischer Strahlung reaktiv wird und mit anderen aktivierten Bindungen ihrer Art Polymerleationsreaktionen und/oder Vernetzungsreaktionen eingeht, die nach radikalischen und/oder ionischen Mechanismen ablaufen.

7. Thixotropierungsmittel nach Anspruch 6, **dadurch gekennzeichnet, dass** man als mit aktinischer Strahlung aktivierbare Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen verwendet.

8. Thixotropierungsmittel nach Anspruch 7, **dadurch gekennzeichnet, dass** man Kohlenstoff-Kohlenstoff-Doppelbindungen verwendet.

9. Thixotropierungsmittel nach Anspruch 8, **dadurch gekennzeichnet, dass** die Kohlenstoff-Kohlenstoff-Doppelbindungen in (Meth)Acrylat-, Ethacrylat-, Crotonat-, Cinnamat-, Vinylether-, Vinylester-, Dicyclopentadienyl-, Norbomenyl-, Isoprenyl-, Isopropenyl, Allyl- oder Butenylgruppen; Dicyclopentadienyl-, Norbomenyl-, Isoprenyl-, Isopropenyl-, Allyl- oder Butenylethergruppen oder Dicyclopentadienyl-, Norbornenyl-, Isoprenyl-, Isoproponyl-, Allyl- oder Butenylestergruppen enthalten sind.

10. Thixotropierungsmittel nach Anspruch 9, **dadurch gekennzeichnet, dass** Allylgruppen, Vinylgruppen und/oder Acrylatgruppen verwendet werden.

11. Thixotropierungsmittel nach Anspruch 1, **dadurch gekennzeichnet, dass** die Verbindung 4 bis 6 Acrylatgruppen im Molekül enthält.

12. Thixotropierungsmittel nach Anspruch 11, **dadurch gekennzeichnet, dass** man Dipentaerythritpentaacrylat verwendet.

13. Thixotropierungsmittell nach einem der Ansprüche 1, 2 oder 4 bis 12 nach einem der Ansprüche 3 bis 12, **dadurch gekennzeichnet, dass** die Harnstoffkristalle nadelförmig und zum Teil oder insgesamt helixartig verdrillt sind und eine Teilchengrößenverteilung (TGV) zwischen 0,1 µm und 6 µm aufweisen, wobei 80% der Harnstoffkristalle kleiner als 2 µm sind.

14. Thixotropierungsmittel nach einem der Ansprüche 1, 2 oder 4 bis 13, **dadurch gekennzeichnet, dass** es die Harnstoffkristalle in einer Menge von, bezogen auf das Thixotropierungsmittel, 0,1 bis 10 Gew.-% enthält.

15. Verwendung des Thixotropierungsmittels gemäß einem der Ansprüche 1, 2 oder 4 bis 13 für die Herstellung von thermisch und mit aktinischer Strahlung härtbaren Beschichtungsstoffen.

16. Thermisch und mit aktinischer Strahlung härtbare Beschichtungsstoffe, Klebstoffe und Dichtungsmassen, enthaltend das Thixotropierungsmittel gemäß einem der Ansprüche 1, 2 oder 4 bis 13.

17. Beschichtungsstoffe, Klebstoffe und Dichtungsmassen nach Anspruch 16, **dadurch gekennzeichnet, dass** es sich um Mehrkomponentensysteme oder um selbstvernetzender oder fremdvernetzende Einkomponentensysteme handelt.

18. Verwendung der Beschichtungsstoffe, Klebstoffe und Dichtungsmassen gemäß Anspruch 16 oder 17 für die Herstellung von Beschichtungen, Klebschichten und Dichtungen auf und/oder in grundierten und ungrundierten Substraten.

19. Verwendung nach Anspruch 18, **dadurch gekennzeichnet, dass** die Beschichtungsstoffe, Klebstoffe und Dichtungsmassen für die Automobilerserlenackierung, die Autoreparaturiackierung, die Lackierung von Bauwerken im Innen- und Außenbereich, die Lackierung von Möbeln, Fenstern und Türen oder für die industrielle Lackierung, inklusive Container Coating, Coil Coating und der Beschichtung oder Imprägnierung von elektrotechnischen Bauteilen.

20. Beschichtungen, Klebschichten und/oder Dichtungen, herstellbar durch die Applikation von Beschichtungsstoffen, Klebstoffen und/oder Dichtungsmassen auf und/oder in ungrundierte Substrate, und Härtung der resultierenden Schicht(en) mit Hitze und aktinischer Strahlung, **dadurch gekennzeichnet, dass** man hierfür mindestens einen Beschichtungsstoff, mindestens einen Klebstoff und/oder mindestens eine Dichtungsmasse gemäß Anspruch 18 oder 17 verwendet.

## Claims

1. Thixotropic agent comprising urea crystals which comprises at least one compound containing at least three functional groups having at least one bond which can be activated with actinic radiation.

2. Thixotropic agent according to Claim 1, **characterized in that** it is preparable by reacting at least one primary and/or secondary amine and/or water with at least one polyisocyanate in a liquid organic medium consisting of or comprising at least one compound containing at least three functional groups having at least one bond which can be activated with actinic radiation.

3. Process for preparing a thixotropic agent comprising urea crystals by reacting at least one primary and/or secondary amine and/or water with at least one polyisocyanate in a liquid organic medium, **characterized in that** the liquid organic medium consists of or comprises at least one compound containing at least three functional groups having at least one bond which can be activated with actinic radiation.

4. Thixotropic agent according to Claim 1 or 2, **characterized in that** said actinic radiation comprises electromagnetic radiation or corpuscular radiation.

5. Thixotropic agent according to Claim 4, **characterized in that** said electromagnetic radiation comprises near infrared (NIR), visible light, UV radiation and/or X-rays and said corpuscular radiation comprises electron beams.

6. Thixotropic agent according to any of Claims 1, 2, 4 and 5, **characterized in that** said bonds which can be activated with actinic radiation comprise bonds which on exposure to actinic radiation become reactive and, with other activated bonds of their kind, undergo polymerization reactions and/or crosslinking reactions which proceed in accordance with free-radical and/or ionic mechanisms.

7. Thixotropic agent according to Claim 6, **characterized in that** said bonds which can be activated with actinic radiation comprise carbon-hydrogen single bonds or carbon-carbon, carbon-oxygen, carbon-nitrogen, carbon-phosphorus or carbon-silicon single or double bonds.

8. Thixotropic agent according to Claim 7, **characterized in that** carbon-carbon double bonds are used.

9. Thixotropic agent according to Claim 8, **characterized in that** said carbon-carbon double bonds are present in (meth)acrylate, ethacrylate, crotonate, cinnamate, vinyl ether, vinyl ester, dicyclopentadienyl, norbornenyl, isoprenyl, isopropenyl, allyl or butenyl groups; dicyclopentadienyl ether, norbornenyl ether, isoprenyl ether, isopropenyl ether, allyl ether or butenyl ether groups; or dicyclopentadienyl ester, norbornenyl ester, isoprenyl ester, isopropenyl ester, allyl ester or butenyl ester groups.

10. Thixotropic agent according to Claim 9, **characterized in that** allyl groups, vinyl groups and/or acrylate groups are used.

11. Thixotropic agent according to Claim 1, **characterized in that** the compound contains from 4 to 6 acrylate groups in the molecule.

12. Thixotropic agent according to Claim 11, **characterized in that** dipentaerythritol pentaacrylate is used.

13. Thixotropic agent according to any of Claims 1, 2 and 4 to 12, **characterized in that** the urea crystals are acicular and, in whole or in part, have a helical twist and have a particle size distribution (PSD) of between 0.1 and 6 µm, 80% of the urea crystals being smaller than 2 µm.

14. Thixotropic agent according to any of Claims 1, 2 and 4 to 13, **characterized in that** it comprises the urea crystals in an amount, based on the thixotropic agent, of from 0.1 to 10% by weight.

15. Use of the thixotropic agent according to any of Claims 1, 2 and 4 to 13 to prepare coating materials curable thermally and with actinic radiation.

16. Coating materials, adhesives and sealing compounds curable thermally and with actinic radiation, comprising the thixotropic agent according to any of Claims 1, 2 and 4 to 13.

17. Coating materials, adhesives and sealing compounds according to Claim 16, **characterized in that** they are multicomponent systems or self-crosslinking or externally crosslinking one-component systems.

18. Use of the coating materials, adhesives and sealing compounds according to Claim 16 or 17 to produce coatings, adhesive films and seals on and/or in primed and unprimed substrates.

19. Use according to Claim 18, **characterized in that** the coating materials, adhesives and sealing compounds are used for automotive OEM finishing, automotive refinishing, the coating of interior and exterior constructions, the coating of furniture, windows and doors, or for industrial coatings, including container coating, coil coating, and the coating or impregnation of electrical components.

20. Coatings, adhesive films and/or seals producible by applying coating materials, adhesives and/or sealing compounds to and/or into unprimed substrates and curing the resultant film(s) with heat and actinic radiation, **characterized in that** at least one coating material, adhesive and/or sealing compound according to Claim 16 or 17 is used.

## Revendications

1. Agent de thixotropie contenant des cristaux d'urée, qui contient au moins un composé comportant au moins trois groupes fonctionnels qui comportent au moins une liaison activable par un rayonnement actinique.

2. Agent de thixotropie selon la revendication 1, **caractérisé en ce qu'**on peut le préparer en faisant réagir au moins une amine primaire et/ou secondaire et/ou de l'eau avec au moins un polyisocyanate dans un milieu organique liquide qui contient ou consiste en au moins un composé comportant au moins trois groupes fonctionnels qui comportent au moins une liaison activable par un rayonnement actinique.

3. Procédé pour la préparation d'un agent de thixotropie, par mise en réaction d'au moins une amine primaire et/ou secondaire et/ou d'eau avec au moins un polyisocyanate dans un milieu organique liquide, **caractérisé en ce que** le milieu organique liquide contient ou consiste en au moins un composé comportant au moins trois groupes fonctionnels qui comportent au moins une liaison activable par un rayonnement actinique.

4. Agent de thixotropie selon la revendication 1 ou 2, **caractérisé en ce qu'**on utilise en tant que rayonnement actinique un rayonnement électromagnétique ou un rayonnement corpusculaire.

5. Agent de thixotropie selon la revendication 4, **caractérisé en ce qu'**on utilise en tant que rayonnement électromagnétique l'infrarouge proche (NIR), la lumière visible, le rayonnement UV et/ou le rayonnement X, et/ou en tant que rayonnement corpusculaire un faisceau d'électrons.

6. Agent de thixotropie selon l'une quelconque des revendications 1, 2, 4 ou 5, **caractérisé en ce qu'**en tant que liaisons activables par un rayonnement actinique, des liaisons qui deviennent actives lors d'irradiation par un rayonnement actinique et participent, avec d'autres liaisons activées de leur type, à des réactions de polymérisation et/ou des réactions de réticulation qui se déroulent selon des mécanismes ioniques et/ou radicalaires.

7. Agent de thixotropie selon la revendication 6, **caractérisé en ce qu'**on utilise comme liaisons activables par un rayonnement actinique des liaisons simples carbone-hydrogène ou des simples ou doubles liaisons carbone-carbone, carbone-oxygène, carbone-azote, carbone-phosphore ou carbone-silicium.

8. Agent de thixotropie selon la revendication 7, **caractérisé en ce qu'**on utilise des doubles liaisons carbone-carbone.

9. Agent de thixotropie selon la revendication 8, **caractérisé en ce que** les doubles liaisons carbone-carbone sont contenues dans des groupes (méth)acrylate, éthacrylate, crotonate, cinnamate, éther vinylique, ester vinylique, dicyclopentadiényle, norbornényle, isoprényle, isopropényle, allyle ou butényle ; des groupes éther dicyclopentadiénylique, norbornénylique, isoprénylique, isopropénylique, allylique ou buténylique ou des groupes ester dicyclopentadiénylique, norbornénylique, isoprénylique, isopropénylique, allylique ou buténylique.

10. Agent de thixotropie selon la revendication 9, **caractérisé en ce qu'**on utilise des groupes alkyle, des groupes vinyle et/ou des groupes acrylate.

11. Agent de thixotropie selon la revendication 1, **caractérisé en ce que** le composé contient de 4 à 6 groupes acrylate dans la molécule.

12. Agent de thixotropie selon la revendication 11, **caractérisé en ce qu'**on utilise le pentaacrylate de dipentaérythritol.

13. Agent de thixotropie selon l'une quelconque des revendications 1, 2 ou 4 à 12, **caractérisé en ce que** les cristaux d'urée sont aciculaires et en partie ou en totalité à enroulement hélicoïdal et présentent une distribution granulométrique (DG) comprise entre 0,1 µm et 6 µm, 80 % des cristaux d'urée ayant une taille inférieure à 2 µm.

14. Agent de thixotropie selon l'une quelconque des revendications 1, 2 ou 4 à 13, **caractérisé en ce qu'**il contient les cristaux d'urée en une quantité de 0,1 à 10 % en poids, par rapport à l'agent de thixotropie.

15. Utilisation de l'agent de thixotropie selon l'une quelconque des revendications 1, 2 ou 4 à 13, pour la production de matières de revêtement durcissables thermiquement et par un rayonnement actinique.

16. Matières de revêtement, adhésifs et matériaux d'étanchéité durcissables thermiquement ou par un rayonnement actinique, contenant l'agent de thixotropie selon l'une quelconque des revendications 1, 2 ou 4 à 13.

17. Matières de revêtement, adhésifs et matériaux d'étanchéité selon la revendication 16**, caractérisés en ce qu'**il s'agit de systèmes multicomposants ou de systèmes monocomposants autoréticulables ou réticulables à l'aide d'un agent de réticulation.

18. Utilisation des matières de revêtement, adhésifs et matériaux d'étanchéité selon la revendication 16 ou 17, pour la production de matières de revêtement, de couches adhésives et de joints d'étanchéité et/ou dans des supports revêtus ou non d'un primaire.

19. Utilisation selon la revendication 18, **caractérisée en ce que** les matières de revêtement, adhésifs et matériaux d'étanchéité sont utilisés pour la mise en peinture en série d'automobiles, le peinturage de réparation d'automobiles, le peinturage de constructions à l'intérieur et à l'extérieur, le peinturage de meubles, de fenêtres et de portes ou pour le peinturage industriel, y compris le peinturage de récipients (*container coating*) le peinturage de rubans continus (*coil coating*) et le revêtement ou l'imprégnation de composants électrotechniques.

20. Revêtements, couches adhésives et/ou joints d'étanchéité, pouvant être produits par l'application de matières de revêtement, d'adhésifs e/ou de matériaux d'étanchéité sur et/ou dans des supports non revêtus d'un primaire, et le durcissement de la/des couche(s) résultante(s) par la chaleur et un rayonnement actinique, **caractérisés en ce qu'**on utilise à cette fin au moins une matière de revêtement, au moins un adhésif et/ou au moins un matériau d'étanchéité selon la revendication 16 ou 17.
